# EUROPÄISCHE PATENTSCHRIFT

(11) **EP 4 197 923 B1**
(45) Veröffentlichungstag und Bekanntmachung des Hinweises auf die Patenterteilung: **09.07.2025**
(21) Anmeldenummer: 22212119.6
(22) Anmeldetag: 08.12.2022
(51) Int. Cl.: B65B 35/44, B65B 59/00, B65B 21/24, B65B 59/04, B65G 21/14, B65G 47/28, B65G 19/02, B65G 47/84

(54) **TRANSPORTSTRECKE FÜR ARTIKEL UND VERFAHREN ZUM ANPASSEN EINER TRANSPORTSTRECKE**
TRANSPORT SECTION FOR ARTICLES AND METHOD FOR ADAPTING A TRANSPORT SECTION
LIGNE DE TRANSPORT POUR ARTICLES ET PROCÉDÉ D'ADAPTATION D'UNE LIGNE DE TRANSPORT

(30) Priorität: 16.12.2021 DE 102021133418
(43) Veröffentlichungstag der Anmeldung: 21.06.2023
(73) Patentinhaber: Krones Aktiengesellschaft, 93073 Neutraubling (DE)
(72) Erfinder: WITTMANN, Stephan, 93073 Neutraubling (DE); KOCH, Peter, 93073 Neutraubling (DE); LUBER, Johann, 93073 Neutraubling (DE); SPINDLER, Herbert, 93073 Neutraubling (DE); WERNER, Jürgen, 93073 Neutraubling (DE); WIMMER, Thomas, 93073 Neutraubling (DE)
(74) Vertreter: Benninger, Johannes

(56) Entgegenhaltungen:
- EP-B1- 3 372 513
- EP-B1- 3 436 360
- DE-A1- 102017 203 581
- US-A1- 2021 114 759

## Beschreibung

Die vorliegende Erfindung betrifft eine Transportstrecke für Artikel und ein Verfahren zum Anpassen einer Transportstrecke für Artikel.

Für eine Verarbeitung, Zusammenstellung, Gruppierung und Verpackung von Artikeln, wie bspw. Getränkebehältern, gibt es unterschiedliche Arten für ihre Verpackung. Derzeit bspw. als Getränkebehälter am häufigsten eingesetzte PET-Behälter weisen relativ geringe Wandstärken auf und sind auch im befüllten Zustand nicht völlig formstabil. Aus diesem Grunde und im Hinblick auf die bessere logistische Handhabbarkeit werden die verschiedensten Verpackungen für gruppierte Einzelbehälter verwendet. So können die Behälter in gruppierter Anordnung bspw. auf einen Kartonbogen gestellt werden, dessen Ränder nach oben gefaltet werden. Auch können Kartonbögen eingesetzt werden, deren Größe mindestens der Grundfläche einer Gebindeanordnung entspricht, und auf welchen die einzelnen als Bestandteil eines Gebindes ausgebildeten Behälter bzw. Getränkebehältnisse aufstehen.

Wahlweise können diese Gebindeanordnungen anschließend mit thermoplastischer Folie umhüllt werden, wobei die thermoplastische Folie mittels eines Erwärmungsprozesses anschließend auf die als Bestandteil eines jeweiligen Gebindes ausgebildeten Getränkebehältnisse geschrumpft wird, um einen stabilen Gebindeverbund zu erhalten, der leicht transportiert und gestapelt werden kann. Eine weitere Gebindevariante wird als "Shrink-only" bezeichnet, da hierbei die zusammengestellten Behälter ohne weiteres Verpackungsmaterial bzw. ohne weitere Zuschnitte mit thermoplastischer Folie umhüllt werden und die thermoplastische Folie nachfolgend auf die jeweiligen zusammengestellten Behälter aufgeschrumpft wird.

Die Formstabilität dieser Gebindevariante wird ausschließlich von der Schrumpffolie gewährleistet. Bekannte Verpackungsmaschinen und deren Fördereinrichtungen sind normalerweise jeweils auf eine bestimmte Art, Größe und/oder Kontur von Fördergütern optimiert. Zudem werden für verschiedene Gebinde- und Verpackungsarten jeweils verschiedene Fördereinrichtungen benötigt. Ein Produktwechsel kann unter Umständen dazu führen, dass bestimmte Fördereinrichtungen nicht mehr eingesetzt werden können, da sie bspw. nicht für den Transport von einzelnen Artikeln oder Behältern und deren jeweiliges Verpackungsmaterial geeignet sind. Ist dies der Fall, so müssen ggf. Fördereinrichtungen ausgetauscht werden, um für eine bestimmte Verpackungsart vorgesehene Artikel transportieren zu können.

Werden Artikel transportiert, die auf Verpackungszuschnitten mit mehreren einzuschlagenden Laschen aufstehen, so werden die jeweiligen Laschen eines jeweiligen Verpackungszuschnittes während der Bewegung des jeweiligen Verpackungszuschnittes in eine aufrechte Orientierung überführt und in der aufrechten Orientierung während des Transportes gehalten. Hierzu wird ein Verpackungsmodul verwendet, das eine Vielzahl an Faltfingern besitzt, um die Laschen in eine aufrechte Orientierung überführen zu können und die Laschen sodann auch während der weiteren Bewegung in der aufrechten Orientierung zu halten.

Sollen hingegen Artikel transportiert werden, die auf keinem Verpackungszuschnitt aufstehen oder auf einem Verpackungszuschnitt aufstehen, der keine solche Laschen besitzt, so sind derartige Verpackungsmoduls nicht geeignet, um Artikel entlang des Transportabschnittes bewegen zu können. Die Verpackungsvorrichtung wird aus diesem Grunde umgerüstet und das Verpackungsmodul durch ein weiteres Verpackungsmodul ersetzt, welches mindestens ein umlaufend angetriebenes Transportband oder eine Überschubplatte besitzen kann.

Eine solche Vorrichtung ist beispielsweise aus der WO 2012/062549 A1 bekannt. Die in diesem Dokument beschriebene Vorrichtung betrifft eine Maschine zur Verarbeitung und/oder Verpackung von Gegenständen mit einer im Wesentlichen horizontalen Transportstrecke zur Förderung von Artikeln, Gebinden und/oder Verpackungseinheiten. Die Maschine umfasst eine erste Horizontalfördereinrichtung mit wenigstens einem Transportmittel für einen ersten Betriebsmodus. Diese Horizontalfördereinrichtung kann zur Herstellung mindestens eines weiteren Betriebsmodus aus der Verpackungsstrecke entnommen und durch eine weitere Horizontalfördereinrichtung ersetzt werden.

Zudem ist ein solcher Transportabschnitt aus der DE 10 2017 203 581 A1 bekannt. Der in der DE-Patentanmeldung offenbarte Transportabschnitt umfasst ein Modul, welches zwei einzelne Moduleinheiten besitzt, die gegeneinander austauschbar sind. Hierdurch kann der Transportabschnitt auf den Transport von Artikeln, die unterschiedliche Verpackungsarten besitzen, angepasst werden.

Aus der EP 3 372 513 B1 ist eine Vorrichtung mit mindestens zwei selektiv in eine bestimmte Betriebsposition überführbaren Modulen bekannt. Die in diesem Dokument beschriebene Vorrichtung umfasst mindestens ein Transportmodul und ein Arbeitsmodul, welche selektiv in eine bestimmte Betriebsposition und eine Warteposition überführbar sind, wobei je nach selektierter Betriebsposition und Warteposition das Endloszugmittel entsprechend angepasst wird.

Um ein ungewolltes Kippen von Artikeln einer jeweiligen Gruppierung zu vermeiden, sind aus dem Stand der Technik zudem Schubstangen bekannt, welche rückseitig mit einer jeweiligen Gruppierung in Anlage treten und die jeweilige Gruppierung sodann während ihrer Bewegung entlang des Transportabschnittes begleiten. Hierdurch kann gewährleistet werden, dass einzelne Artikel einer jeweiligen Gruppierung nicht ungewollt kippen. Wird zwischen unterschiedlichen Moduleinheiten, welche für unterschiedliche Verpackungsarten vorgesehen sind, gewechselt, so kann es entweder sein, dass eine rückseitige Anlage von solchen Schubstangen an der jeweiligen Gruppierung notwendig ist oder dass eine rückseitige Anlage solcher Schubstangen entfallen muss, um die jeweilige Gruppierung sicher entlang des jeweiligen Transportabschnittes bewegen zu können.

Sofern zwischen unterschiedlichen Modulen gewechselt wird, werden Gelenkketten mit hieran angeordneten Schubstangen aus dem jeweiligen Transportabschnitt entfernt, sofern für die jeweilige Moduleinheit keine rückseitige Anlage von Schubstangen an Gruppierungen während ihrer Bewegung vorgesehen ist.

Auch kann es sein, dass eine Gelenkkette mit hieran angeordneten Schubstangen im Bereich eines Transportabschnittes angeordnet werden muss, sofern für die jeweilige Moduleinheit eine rückseitige Anlage von Schubstangen an Gruppierungen von Artikeln während ihrer Bewegung sinnvoll oder sogar notwendig ist. Eine solche Umstellung eines Transportabschnittes bei einem Wechsel zwischen unterschiedlichen Moduleinheiten ist bis dato mit einem hohen Zeitaufwand verbunden und umständlich.

Aufgabe der Erfindung ist, eine Möglichkeit bereitzustellen, mit welcher ein solcher Wechsel zwischen unterschiedlichen Moduleinheiten einfach und mit geringem Zeitaufwand möglich ist.

Die obige Aufgabe wird durch die Gegenstände gelöst, welche die Merkmale in den unabhängigen Ansprüchen umfassen. Vorteilhafte Ausführungsformen werden durch die abhängigen Ansprüche beschrieben.

Die Erfindung betrifft eine Transportstrecke für Artikel wie Getränkebehälter oder dergleichen. Insbesondere betrifft die Erfindung eine Transportstrecke für Artikel, die durch Getränkebehälter ausgebildet sind. Bei den Getränkebehältern kann es sich beispielsweise um Getränkeflaschen und/oder um Getränkedosen handeln.

Die Transportstrecke umfasst einen ersten Transportabschnitt zur Bewegung von gruppierten Artikeln und einen zweiten Transportabschnitt, welcher an den ersten Transportabschnitt anschließt und welcher
a) ein erstes Modul mit mehreren umlaufend geführten Faltfingern umfasst, über welche Laschen von Verpackungszuschnitten mit einer jeweiligen hierauf aufstehenden Gruppierung an Artikeln während einer Bewegung entlang des zweiten Transportabschnittes in einer aufrechten Orientierung gehalten werden können und welcher zweite Transportabschnitt
b) ein zweites Modul umfasst, welches wenigstens ein Transportband zur Bewegung von gruppierten Artikeln entlang des zweiten Transportabschnittes oder wenigstens eine Überschubplatte zur gleitenden Bewegung von Gruppierungen an Artikeln entlang des zweiten Transportabschnittes umfasst.

Das erste Modul und das zweite Modul sind gegeneinander austauschbar. So kann es beispielsweise sein, dass sich das erste Modul in einem Betriebsmodus befindet, hierbei gruppierte Artikel entlang des zweiten Transportabschnittes bewegt und Laschen eines jeweiligen Verpackungsmittels, auf welchem jeweiligen Verpackungsmittel eine jeweilige Gruppierung aufsteht, hierbei in einer aufrechten Orientierung hält. Zeitgleich kann sich das zweite Modul in einer Warteposition befinden und ggf. inaktiv sein. Die Warteposition kann sich ebenso im Bereich des zweiten Transportabschnittes befinden oder entfernt vom zweiten Transportabschnitt, also beispielsweise in einem Lager, ausgebildet sein.

In der Praxis haben sich beispielsweise Ausführungsformen bewährt, bei welchen das zweite Modul in seiner Warteposition oberhalb des ersten Moduls angeordnet ist, wenn sich das erste Modul in seiner Betriebsposition bzw. in einem Betriebsmodus befindet. Demnach kann es auch sein, dass das erste Modul in einer Warteposition oberhalb des zweiten Moduls angeordnet ist, wenn sich das zweite Modul in einer Betriebsposition bzw. in einem Betriebsmodus befindet.

Weiter umfasst die Transportstrecke mindestens ein Endloszugmittel mit mehreren hieran angeordneten Schubstangen, welche mehreren Schubstangen die Gruppierungen an Artikeln im Verlauf ihrer Bewegung entlang des ersten Transportabschnittes unter rückseitiger Anlage begleiten. Insbesondere können zwei Endloszugmittel vorgesehen sein, die parallel zueinander angeordnet sind und an welchen zwei Endloszugmitteln die mehreren Schubstangen jeweils angeordnet sind.

Es ist vorgesehen, dass eine entlang der Transportstrecke ausgebildete Reichweite des jeweiligen Endloszugmittels anpassbar ist, so dass
i) die am jeweiligen Endloszugmittel angeordneten mehreren Schubstangen entweder Gruppierungen an Artikeln im Verlauf ihrer Bewegung lediglich entlang des ersten Transportabschnittes unter rückseitiger Anlage begleiten oder
ii) die am jeweiligen Endloszugmittel angeordneten mehreren Schubstangen Gruppierungen an Artikeln im Verlauf ihrer Bewegung entlang des ersten Transportabschnittes sowie im Verlauf ihrer Bewegung entlang des zweiten Transportabschnittes unter jeweiliger rückseitiger Anlage begleiten.

Die Erfindung ist dadurch gekennzeichnet, dass im Bereich des zweiten Transportabschnittes eine Führung für das jeweilige Endloszugmittel vorgesehen ist und dass zur Verkürzung der jeweiligen Reichweite des jeweiligen Endloszugmittels ein Abschnitt vom jeweiligen Endloszugmittel abtrennbar ist und dass die Führung zum Halten des abgetrennten Abschnittes des jeweiligen Endloszugmittels im Bereich des zweiten Transportabschnittes ausgebildet ist.

Insbesondere kann es hierbei sein, dass die entlang der Transportstrecke ausgebildete Reichweite des jeweiligen Endloszugmittels derart anpassbar ist, dass die am jeweiligen Endloszugmittel angeordneten mehreren Schubstangen Gruppierungen an Artikeln im Verlauf ihrer Bewegung entlang des ersten Transportabschnittes sowie im Verlauf ihrer Bewegung entlang des zweiten Transportabschnittes über das gesamte zweite Modul begleiten können, wenn sich das zweite Modul in einer Betriebsposition befindet.

Durch eine solche Anpassung der Reichweite des jeweiligen Endloszugmittels kann eine Umstellung oder Anpassung der Transportstrecke schnell und einfach erfolgen, wenn das erste Modul gegen das zweite Modul bzw. wenn das zweite Modul gegen das erste Modul ausgetauscht wird.

Weiter haben sich Ausführungsformen bewährt, bei welchen das mindestens eine Endloszugmittel durch wenigstens einen Speicher geführt ist, über welchen wenigstens einen Speicher bei einer Verkürzung der Reichweite des mindestens einen Endloszugmittels ein nicht benötigter Anteil des mindestens einen Endloszugmittels aufnehmbar ist und aus welchem Speicher bei einer Vergrößerung der Reichweite des mindestens einen Endloszugmittels ein hierbei zusätzliche benötigter Anteil des mindestens einen Endloszugmittels entnehmbar ist.

Es kann sein, dass das jeweilige Endloszugmittel über wenigstens eine bestimmte Umlenkung geführt ist, welche wenigstens eine bestimmte Umlenkung zur Anpassung der Reichweite des jeweiligen Endloszugmittels wahlweise entlang einer Bewegungsrichtung der Artikel oder entgegengesetzt zu einer Bewegungsrichtung der Artikel verstellbar ist.

Weiter können eine Steuerungseinrichtung und wenigstens ein Aktor vorgesehen sein, mit welchem die Steuerungseinrichtung in Verbindung steht. Der Steuerungseinrichtung können Informationen bereitstellbar sein, über welche die Steuerungseinrichtung erkennen kann, ob das erste Modul oder das zweite Modul zum Transport von Artikeln im Bereich des zweiten Transportabschnittes vorgesehen ist. Zudem kann die Steuerungseinrichtung zum automatischen und definierten Verstellen der wenigstens einen bestimmten Umlenkung über den wenigstens einen Aktor unter Berücksichtigung der bereitgestellten Informationen ausgebildet sein.

Vorstellbar ist auch, dass die Führung aktorisch und schräg oder senkrecht zu einer Bewegungsrichtung der Gruppierungen an Artikeln verstellbar ist, so dass der von der Führung gehaltene abgetrennte Abschnitt des jeweiligen Endloszugmittels und die hieran angeordneten Schubstangen nicht mit Gruppierungen an Artikeln während ihrer Bewegung entlang des zweiten Transportabschnittes kollidieren.

Auch kann es sein, dass das mindestens eine Endloszugmittel durch mindestens eine Gelenkkette und insbesondere durch mindestens eine Rollenkette ausgebildet ist, welche mindestens ein Kettenschloss umfasst, unter Zuhilfenahme welchen mindestens einen Kettenschlosses zur Verkürzung einer Reichweite der mindestens einen Gelenkkette ein Abschnitt von der jeweiligen Gelenkkette abtrennbar und zur Verlängerung einer Reichweite der mindestens einen Gelenkkette ein zusätzlicher Abschnitt mit der jeweiligen Gelenkkette verbindbar ist.

Vorstellbar ist, dass ein Untertrum des mindestens einen Endloszugmittels unterhalb einer durch das erste Modul und das zweite Modul ausgebildeten Transportebene für Artikel geführt ist. Alternativ hierzu kann es sein, dass ein Untertrum des mindestens einen Endloszugmittels oberhalb einer durch das erste Modul und das zweite Modul ausgebildeten Transportebene für Artikel geführt ist.

Die Erfindung betrifft zudem ein Verfahren zum Anpassen einer Transportstrecke für Artikel wie Getränkebehälter oder dergleichen. Die Transportstrecke besitzt einen ersten Transportabschnitt, entlang welchen ersten Transportabschnittes gruppierte Artikel bewegt werden. Weiter besitzt die Transportstrecke einen zweiten Transportabschnitt, welcher an den ersten Transportabschnitt anschließt und für welchen zweiten Transportabschnitt die Transportstrecke
a) ein erstes Modul mit mehreren umlaufend geführten Faltfingern umfasst, über die Laschen von Verpackungszuschnitten mit einer jeweiligen hierauf aufstehenden Gruppierung an Artikeln während einer Bewegung entlang des zweiten Transportabschnittes in einer aufrechten Orientierung gehalten werden können und für welchen zweiten Transportabschnitt die Transportstrecke
b) ein zweites Modul umfasst, welches wenigstens ein Transportband zur Bewegung von gruppierten Artikeln entlang des zweiten Transportabschnittes oder wenigstens eine Überschubplatte zur gleitenden Bewegung von Gruppierungen an Artikeln entlang des zweiten Transportabschnittes besitzt.

Weiter ist bei dem Verfahren mindestens ein Endloszugmittel mit mehreren hieran angeordneten Schubstangen vorgesehen, welche mehreren Schubstangen die Gruppierungen an Artikeln im Verlauf ihrer Bewegung entlang des ersten Transportabschnittes unter rückseitiger Anlage begleiten. Auch ist vorgesehen, dass das erste Modul und das zweite Modul gegeneinander ausgetauscht werden und dass mit einem jeweiligen Austausch eine entlang der Transportstrecke ausgebildete Reichweite des jeweiligen Endloszugmittels angepasst wird, so dass
i) die am jeweiligen Endloszugmittel angeordneten mehreren Schubstangen Gruppierungen an Artikeln im Verlauf ihrer Bewegung lediglich entlang des ersten Transportabschnittes unter rückseitiger Anlage begleiten, wenn sich das erste Modul im Bereich des zweiten Transportabschnittes in einem Betriebsmodus befindet oder
ii) die am jeweiligen Endloszugmittel angeordneten mehreren Schubstangen Gruppierungen an Artikeln im Verlauf ihrer Bewegung entlang des ersten Transportabschnittes und entlang des zweiten Transportabschnittes unter jeweiliger rückseitiger Anlage begleiten, wenn sich das zweite Modul im Bereich des zweiten Transportabschnittes in einem Betriebsmodus befindet.

Das Verfahren ist dadurch gekennzeichnet, dass für eine Verkürzung der Reichweite des mindestens einen Endloszugmittels ein Abschnitt vom jeweiligen Endloszugmittel abgetrennt wird, welcher abgetrennte Abschnitt im Bereich des zweiten Transportabschnittes verbleibt. Vor oder nach dem Abtrennen dieses Abschnittes können zudem Schubstangen abgenommen werden, welche bis dahin an diesem Abschnitt des jeweiligen Endloszugmittels angeordnet sind. Zudem ist vorgesehen, dass für eine Verlängerung der Reichweite des mindestens einen Endloszugmittels ein im Bereich des zweiten Transportabschnittes bereits befindlicher zusätzlicher Abschnitt mit dem jeweiligen Endloszugmittel verbunden wird. Vor oder nach dem Verbinden können Schubstangen an diesem zusätzlichen Abschnitt in definierten Abständen angeordnet werden.

Es kann hierbei sein, dass das mindestens eine Endloszugmittel während seiner Bewegung von wenigstens einem Speicher abschnittsweise aufgenommen wird, wobei bei einer Verkürzung einer Reichweite des mindestens einen Endloszugmittels ein nicht benötigter Anteil des mindestens einen Endloszugmittels im Speicher angeordnet wird und bei einer Vergrößerung der Reichweite des mindestens einen Endloszugmittels ein hierbei zusätzlich benötigter Anteil des mindestens einen Endloszugmittels aus dem wenigstens einen Speicher entnommen wird.

Weiter kann das jeweilige Endloszugmittel über wenigstens eine bestimmte Umlenkung geführt sein, welche wenigstens eine bestimmte Umlenkung zum Anpassen einer Reichweite des jeweiligen Endloszugmittels wahlweise in bzw. entlang einer Bewegungsrichtung der Artikel oder entgegengesetzt zu einer Bewegungsrichtung der Artikel verstellt wird.

Vorstellbar ist zudem, dass einer Steuerungseinrichtung Informationen bereitgestellt werden, ob sich das erste Modul oder das zweite Modul im Bereich des zweiten Transportabschnittes in einem Betriebsmodus befindet. Die Steuerungseinrichtung kann hierbei mit wenigstens einem Aktor in Verbindung stehen, über welchen die Steuerungseinrichtung unter Berücksichtigung der bereitgestellten Informationen die wenigstens eine Umlenkung zum Anpassen der Reichweite des jeweiligen Endloszugmittels verstellt.

Der wenigstens eine Aktor kann in diversen Ausführungsformen durch einen Linearmotor ausgebildet sein. Alternativ oder ergänzend hierzu kann es sein, dass die Transportstrecke einen Teleskopmechanismus umfasst, wobei die Steuerungseinrichtung über den wenigstens einen Aktor den Teleskopmechanismus betätigt und unter Berücksichtigung der bereitgestellten Informationen die wenigstens eine Umlenkung zum Anpassen der Reichweite des jeweiligen Endloszugmittels über den Teleskopmechanismus verstellt.

Bewährt haben sich Ausführungsformen, bei welchen das mindestens eine Endloszugmittel durch mindestens eine Gelenkkette bzw. Rollenkette ausgebildet ist. Hierbei kann für das jeweilige als Gelenkkette ausgebildete Endloszugmittel mindestens ein jeweiliges Kettenschloss vorgesehen sein, über welches zum Abtrennen des Abschnittes vom jeweiligen als Gelenkkette ausgebildeten Endloszugmittel eine Verbindung zwischen dem Abschnitt und einem verbleibenden Teil des jeweiligen als Gelenkkette ausgebildeten Endloszugmittels aufgehoben wird.

Weiter kann über das mindestens eine Kettenschloss für eine Verlängerung der Reichweite des jeweiligen als Gelenkkette ausgebildeten Endloszugmittels ein im Bereich des zweiten Transportabschnittes bereits befindlicher zusätzlicher Abschnitt mit dem jeweiligen als Gelenkkette ausgebildeten Endloszugmittel verbunden werden. Insbesondere können genau zwei Kettenschlösser vorgesehen sein, welche genau zwei Kettenschlösser gelöst werden, woraus resultierend die bis dahin bestehende Verbindung zwischen dem Abschnitt und einem verbleibenden Teil des jeweiligen als Gelenkkette ausgebildeten Endloszugmittels aufgehoben wird und zwei freie Endbereich des verbleibenden Teils des jeweiligen als Gelenkkette ausgebildeten Endloszugmittels entstehen.

Die zwei freien Endbereiche des verbleibenden Teils des jeweiligen als Gelenkkette ausgebildeten Endloszugmittels können sodann ggf. mittels eines Kettenschlosses miteinander verbunden werden, so dass der verbleibende Teil des jeweiligen als Gelenkkette ausgebildeten Endloszugmittels hierdurch geschlossen wird. Sodann können die am verbleibenden Teil des jeweiligen Endloszugmittels noch angeordneten mehreren Schubstangen Gruppierungen an Artikeln im Verlauf ihrer Bewegung lediglich entlang des ersten Transportabschnittes unter rückseitiger Anlage begleiten, wenn sich das erste Modul im Bereich des zweiten Transportabschnittes in einem Betriebsmodus befindet.

Es sei an dieser Stelle ausdrücklich erwähnt, dass alle Aspekte und Ausführungsvarianten, die im Zusammenhang mit der erfindungsgemäßen Transportstrecke erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Transportstrecke von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Transportstrecke betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Transportstrecke.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1A und 1B zeigen jeweils eine schematische Darstellung einer ersten Ausführungsform einer erfindungsgemäßen Transportstrecke und verdeutlichen jeweils Schritte, wie sie bei diversen Ausführungsformen des erfindungsgemäßen Verfahrens vorgesehen sein können.

Figuren 2A und 2B zeigen jeweils eine schematische Darstellung einer weiteren Ausführungsform einer erfindungsgemäßen Transportstrecke und verdeutlichen jeweils Schritte, wie sie bei diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

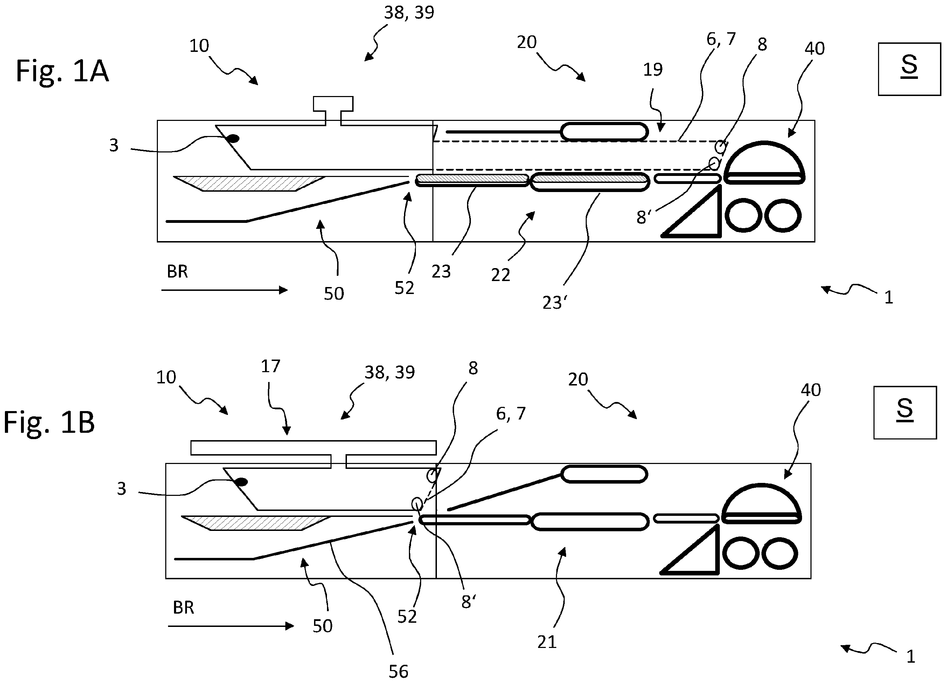

Die Figuren 1A und 1B zeigen jeweils eine schematische Darstellung einer ersten Ausführungsform einer erfindungsgemäßen Transportstrecke 1 und verdeutlichen einzelne Schritte, wie sie bei diversen Ausführungsformen des erfindungsgemäßen Verfahrens vorgesehen sein können. Die Transportstrecke 1 umfasst einen ersten Transportabschnitt 10, über den bereits gruppierte Getränkebehälter in Bewegungsrichtung BR gefördert werden können. Um solche Gruppen aus jeweils mehreren Getränkebehältern zu bilden, sind vorliegend zwei Endloszugmittel 6 vorgesehen, an welchen mehrere Schubstangen 3 angeordnet sind.

In Figuren 1A und 1B ist aus Gründen der Übersichtlichkeit lediglich eine solche Schubstange 3 dargestellt. An dem Endloszugmittel 6 ist in der Praxis jedoch eine Vielzahl solcher Schubstangen 3 angeordnet. In Bildrichtung hinter dem in Figuren 1A und 1B dargestellten Endloszugmittel 6 befindet sich ein weiteres Endloszugmittel, welches parallel zu dem in Figuren 1A und 1B dargestellten Endloszugmittel 6 geführt ist. Eine jeweilige Schubstange 3 steht mit diesen beiden Endloszugmitteln 6 in Verbindung und wird über diese beiden Endloszugmittel 6 umlaufend geführt.

Um eine jeweilige Gruppierung aus mehreren Getränkebehältern zu bilden, tritt eine jeweilige Schubstange 3 rückseitig mit für eine jeweilige Gruppierung vorgesehenen Getränkebehältern in Oberflächenkontakt und beschleunigt diese Getränkebehälter kurzzeitig gegenüber ihrer bisherigen im Bereich des ersten Transportabschnittes 10 ausgebildeten Geschwindigkeit. Hierdurch werden die für eine jeweilige Gruppierung vorgesehenen Getränkebehälter gegenüber nacheilenden Getränkebehältern beabstandet und weiter in Richtung eines zweiten Transportabschnittes 20 der Transportstrecke 10 bewegt.

Die Figuren 1A und 1B zeigen darüber hinaus, dass die Transportstrecke 1 eine Zuschnittszuführung 50 umfasst, welche Verpackungsmittel über einen Spalt 52 in einen Transportweg der Getränkebehälter einbringen kann. Eine jeweilige Gruppierung an Getränkebehältern kann hierdurch bei einem Übertritt vom ersten Transportabschnitt 10 in den zweiten Transportabschnitt 20 auf ein jeweiliges Verpackungsmittel auffahren.

In der Darstellung der Fig. 1A werden über die Zuschnittszuführung 50 flächige Verpackungsmittel in den Transportweg der Gruppierungen an Getränkebehältern eingebracht, welche flächigen Verpackungsmittel keine Laschen besitzen, die in Richtung nach oben gefaltet werden müssen. Solche Verpackungsmittel werden in der Praxis als PAD bezeichnet. Wenn eine jeweilige Gruppierung vom ersten Transportabschnitt 10 auf den zweiten Transportabschnitt 20 übertritt, fährt eine jeweilige Gruppierung an Getränkebehältern auf ein jeweiliges Verpackungsmittel auf, welches hierbei über die Zuschnittszuführung 50 durch den Spalt 52 in den Transportweg der Gruppierungen an Getränkebehältern eingebracht wird.

Um die Getränkebehälter einer jeweiligen Gruppierung sicher und ohne oder mit lediglich geringem Risiko eines ungewollten Kippens entlang des zweiten Transportabschnittes 20 bewegen zu können, befindet sich in Fig. 1A ein zweites Modul 22 in einem Betriebsmodus. Das zweite Modul 22 und das in Fig. 1B gezeigte und nachfolgend noch beschriebene erste Modul 21 können gegeneinander ausgetauscht werden, so dass sich im Bereich des zweiten Transportabschnittes 20 entweder das erste Modul 21 (vgl. Fig. 1B) oder das zweite Modul 22 (vgl. Fig. 1A) in einem jeweiligen Betriebsmodus befindet und Gruppierungen mit jeweils mehreren Getränkebehältern in Bewegungsrichtung BR entlang des zweiten Transportabschnittes 20 bewegt.

Das zweite Modul 22 umfasst vorliegend zwei Transportbänder 23 und 23', auf welchen Gruppierungen an Getränkebehältern zusammen mit ihrem flächigen Verpackungsmittel bzw. PAD aufstehen und welche zwei Transportbänder 23 und 23' Gruppierungen an Getränkebehältern zusammen mit einem jeweiligen flächigen Verpackungsmittel entlang des zweiten Transportabschnittes 20 bewegen. Über die Transportbänder 23 und 23' werden die Gruppierungen an Getränkebehältern zusammen mit ihrem flächigen Verpackungsmittel in Richtung eines Einschlagmoduls 40 geführt, über das ein jeweiliger aus thermoplastischem Verpackungsmaterial bestehender Zuschnitt auf eine jeweilige Gruppierung an Getränkebehältern aufgelegt werden kann, sofern dies im Rahmen eines Verpackungsprogrammes vorgesehen ist. An das Einschlagmodul 40 schließt ein nicht mit dargestellter Schrumpftunnel an, welcher einen jeweiligen Zuschnitt aus thermoplastischem Verpackungsmaterial ggf. auf eine jeweilige Gruppierung an Getränkebehältern aufschrumpft.

Die schematische Seitenansicht der Fig. 1A verdeutlicht zudem, dass sich das jeweilige Endloszugmittel 6 über das zweite Modul 22 bzw. über die Transportbänder 23 und 23' des zweiten Moduls 22 entlang der Bewegungsrichtung BR erstreckt, wenn sich das zweite Modul 22 in einem Betriebsmodus befindet. Eine jeweilige Schubstange 3 steht rückseitig mit Getränkebehältern einer jeweiligen Gruppierung in Oberflächenkontakt, wenn die Getränkebehälter einer jeweiligen Gruppierung über die Transportbänder 23 und 23' in Bewegungsrichtung BR gefördert werden.

Hierdurch können die Getränkebehälter einer jeweiligen Gruppierung über eine jeweilige Schubstange 3 stabilisiert werden, wenn das jeweilige Transportband 23 bzw. 23' die jeweiligen Getränkebehälter einer jeweiligen Gruppierung in Bewegungsrichtung BR entlang des zweiten Transportabschnittes 20 bewegt. Eine umlaufende Geschwindigkeit des Endloszugmittels 6 und eine Transportgeschwindigkeit der Transportbänder 23 und 23' sind somit aufeinander abgestimmt.

Ein solches zweites Modul 22 mit Transportbändern 23 bzw. 23' kann im Bereich des zweiten Transportabschnittes 20 somit angeordnet sein, wenn Gruppierungen an Getränkebehältern auf einem flächigen Verpackungsmittel aufstehen, das keine in Richtung nach oben zu faltenden Laschen besitzt. Durch die beiden Transportbänder 23 und 23' und durch die Schubstangen 3, welche mit Gruppierungen an Getränkebehältern rückseitig in Anlage stehen, können die auf den Verpackungsmitteln bereits aufstehenden Getränkebehälter einer jeweiligen Gruppierung sicher entlang des zweiten Transportabschnittes 20 bewegt werden.

Alternativ zu diesen Transportbändern 23 und 23' kann ein solches zweites Modul 22 auch mindestens eine Überschubplatte umfassen, welche sich anstelle der beiden Transportbänder 23 und 23' im Bereich des zweiten Transportabschnittes 20 befindet. Überschubplatten sind dann sinnvoll, wenn Getränkebehältern einer jeweiligen Gruppierung während einer Bewegung entlang des zweiten Transportabschnittes 20 kein Verpackungsmittel zugeordnet wurde, auf welchem Getränkebehälter einer jeweiligen Gruppierung aufstehen. Die Zuschnittszuführung 50 kann für diesen Fall inaktiv geschalten werden und somit keine Verpackungsmittel über den Spalt 52 in den Transportweg der Getränkebehälter einbringen. In der Praxis sind beispielsweise mehrere Getränkebehälter umfassende Gebinde bekannt, die lediglich durch thermoplastisches Verpackungsmaterial zusammengehalten werden.

Sollen solche Gebinde hergestellt werden, so wird die Zuschnittszuführung 50 inaktiv geschalten und ein zweites Modul 22, welches mindestens eine Überschubplatte besitzt, im Bereich des zweiten Transportabschnittes 22 angeordnet. Die Schubstangen 3, welche am Endloszugmittel 6 angeordnet sind, schieben sodann Getränkebehälter einer jeweiligen Gruppierung gleitend entlang der mindestens einen Überschubplatte. Es ist somit notwendig, dass sich das Endloszugmittel 6 über die Überschubplatten eines solchen zweiten Moduls 22 erstreckt, da die Schubstangen 3 hierbei sowohl einer Stabilisierung von Getränkebehältern einer jeweiligen Gruppierung als auch einer Fortbewegung von Getränkebehältern einer jeweiligen Gruppierung dienen.

Die Fig. 1B zeigt nun die Transportstrecke 1 nach einer Anpassung, welche auf eine alternative Art der Verpackung einer jeweiligen Gruppierung an Getränkebehälter abgestimmt ist. Wie Fig. 1B erkennen lässt, befindet sich im Bereich des zweiten Transportabschnittes 20 ein erstes Modul 21 in einem Betriebsmodus. Das zweite Modul 22 wurde aus dem Bereich des zweiten Transportabschnittes 20 entnommen und kann sich nun oberhalb des ersten Moduls 21 befinden oder in ein Lager transportiert worden sein, aus welchem es bei Bedarf zur erneuten Installation im zweiten Transportabschnitt 20 zurückgeholt wird.

In der Darstellung der Fig. 1B ist die Zuschnittszuführung 50 aktiv, so dass über eine Verbringungseinrichtung 56 taktweite Verpackungsmittel über den Spalt 52 derart in den Transportweg der Gruppierungen an Getränkebehältern eingebracht werden, dass eine jeweilige mehrere Getränkebehälter umfassende Gruppierung auf ein jeweiliges Verpackungsmittel auffährt. Bei den Verpackungsmitteln handelt es sich um sogenannte Trays. Ein jeweiliges Tray besitzt zwei seitliche Laschen sowie eine jeweilige vordere Lasche und eine jeweilige hintere Lasche, die während der Bewegung entlang des zweiten Transportabschnittes 20 in Richtung nach oben gefaltet und sodann in einer aufrechten Orientierung gehalten werden.

Das in Fig. 1A bereits gezeigte zweite Modul 22, welches zwei Transportbänder 23 und 23' umfasst, ist ungeeignet, um Laschen eines solchen Trays in Richtung nach oben falten zu können. Aus diesem Grunde umfasst das erste Modul 21, wie es in Fig. 1B lediglich schematisch dargestellt ist, mehrere Faltfinger, welche mit einer jeweiligen Lasche in Oberflächenkontakt treten, die jeweilige Lasche aufrichten und sodann während der weiteren Bewegung entlang des zweiten Transportabschnittes 20 in einer aufrechten Orientierung halten.

Die Fig. 1B zeigt auch, dass die Erstreckung des Endloszugmittels 6 entlang der Transportstrecke 1 gegenüber Fig. 1A verkürzt wurde.

Bei aus dem Stand der Technik bekannten Transportstrecken wir ein zusätzliches Endloszugmittel im Bereich des zweiten Transportabschnittes 20 angeordnet, wenn sich ein zweites Modul 22 entsprechend der vorherigen Beschreibung zu Fig. 1A in einem Betriebsmodus befindet. Sofern das zweite Modul 22 aus dem zweiten Transportabschnitt 20 entfernt und das erste Modul 21 im Bereich des zweiten Transportabschnittes 22 positioniert wird, muss auch ein solches zusätzliches Endloszugmittel aus dem Bereich des zweiten Transportabschnittes 20 entnommen werden. Hiermit ist ein zusätzlicher Arbeitsaufwand verbunden.

Bei der Transportstrecke 1 nach Figuren 1A und 1B kann hingegen eine Reichweite des auf Verweis mit Ziffer 6 dargestellten Endloszugmittels 6 entlang der Transportstrecke 1 bzw. entlang der Bewegungsrichtung BR angepasst werden. Wie es in Figuren 1A und 1B jeweils gezeigt wird, ist das Endloszugmittel 6 über zwei bestimmte Umlenkungen 8 und 8' umlaufend geführt. Diese zwei bestimmten Umlenkungen 8 und 8' können entlang der Transportstrecke 1 bzw. in Bewegungsrichtung BR sowie entgegengesetzt zur Bewegungsrichtung BR gemeinsam verstellt werden, um die Reichweite des Endloszugmittels 6 entsprechend anzupassen. Sofern die Reichweite des Endloszugmittels 6 verkürzt wird, kann ein nicht benötigter Anteil 17 des Endloszugmittels 6 über einen Speicher 38 aufgenommen werden.

Soll das entsprechend seiner Reichweite verkürzte Endloszugmittel 6 verlängert und aus seiner Erstreckung gemäß Fig. 1B in eine Erstreckung gemäß Fig. 1A gebracht werden, wird der über den Speicher 38 aufgenommene Anteil bzw. ein zusätzlich benötigter Anteil 19 des jeweiligen Endloszugmittels 6 aus dem Speicher 38 entnommen. Durch eine solche Anpassung der Reichweite des Endloszugmittels 6 kann eine Anpassung der Transportstrecke 1 an unterschiedliche Verpackungsarten auf einfache Art und Weise sowie in kurzer Zeit erfolgen.

Bei der Ausführungsform nach Figuren 1A und 1B ist das Endloszugmittel 6 als Gelenkkette 7 ausgebildet. Bei dem Speicher 38 handelt es sich daher um einen Kettenspeicher 39. Alternativ hierzu kann das Endloszugmittel 6 beispielsweise auch als Riemen ausgebildet sein und durch einen Speicher 38 aufgenommen werden.

Bestandteil der Transportstrecke 1 ist bei der Ausführungsform nach Figuren 1A und 1B zudem eine Steuerungseinrichtung S. Der Steuerungseinrichtung S können Informationen vorgegeben werden, welche Verpackungsart für die entlang der Transportstrecke 1 zu bewegenden Gruppierungen an Getränkebehältern vorgesehen ist. Insbesondere können der Steuerungseinrichtung S solche Informationen vorgegeben werden, ob Gruppierungen an Getränkebehältern während ihrer Bewegung entlang des zweiten Transportabschnittes 20 auf einem jeweiligen Verpackungsmittel bzw. auf einem jeweiligen Tray aufstehen oder ob Gruppierungen an Getränkebehältern auf einem Verpackungsmittel ohne Laschen aufstehen bzw. sogar ohne ein solches Verpackungsmittel bewegt werden.

Die Steuerungseinrichtung S kann mittels der Informationen darauf schließen, ob sich das erste Modul 21 oder das zweite Modul 22 im Bereich des zweiten Transportabschnittes 20 befinden muss und die Reichweite des Endloszugmittels 6 entlang der Transportstrecke hierauf über einen Aktor selbständig anpassen.

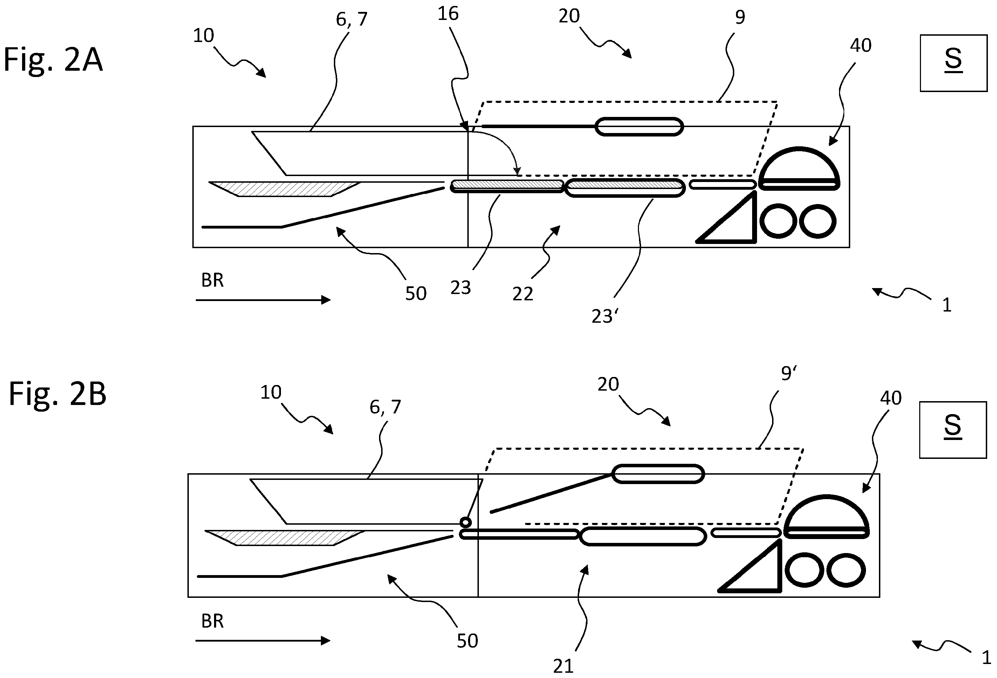

Die Figuren 2A und 2B zeigen jeweils eine schematische Darstellung einer weiteren Ausführungsform einer erfindungsgemäßen Transportstrecke 1 und verdeutlichen jeweils Schritte, wie sie bei diversen Ausführungsformen des erfindungsgemäßen Verfahrens vorgesehen sein können. Die Transportstrecke 1 nach Figuren 2A und 2B umfasst einen ersten Transportabschnitt 10, einen zweiten Transportabschnitt 20 sowie ein erstes Modul 21 und ein zweites Modul 22, die gegeneinander ausgetauscht werden können.

Auch umfasst die Transportstrecke 1 des Ausführungsbeispiel nach Figuren 2A und 2B ein Einschlagmodul 40 und eine Zuschnittszuführung 50, über welche Verpackungsmittel durch einen Spalt 52 in einen Transportweg von Getränkebehältern eingebracht werden können. Diese Komponenten sind identisch zum Ausführungsbeispiel nach Figuren 1A und 1B ausgebildet, so dass auf die vorherige Beschreibung rückverwiesen werden kann.

Vom Ausführungsbeispiel einer Transportstrecke 1 nach Figuren 1A und 1B unterscheidet sich das Ausführungsbeispiel einer Transportstrecke 1 entsprechend Figuren 2A und 2B somit lediglich mit Blick auf die Vorgehensweise bei einer Anpassung der Reichweite des Endloszugmittels 6, welches wiederum als Gelenkkette 7 ausgebildet ist.

In der Darstellung der Fig. 2B befindet sich das erste Modul 21 mit seinen Faltfingern in einem Betriebsmodus. Entlang des zweiten Transportabschnittes 20 werden somit Gruppierungen an Getränkebehältern bewegt, welche hierbei auf einem jeweiligen Verpackungsmittel aufstehen, das in Richtung nach oben zu faltende Laschen besitzt. Die Faltfinger überführen während des Transportes Laschen eines jeweiligen Verpackungsmittels in eine aufrechte Orientierung. Im Bereich des ersten Transportabschnittes 10 steht wiederum ein Schubbalken 3 rückseitig mit Getränkebehältern einer jeweiligen Gruppierung in Oberflächenkontakt und begleitet die Getränkebehälter einer jeweiligen Gruppierung während ihrer Bewegung entlang des ersten Transportabschnittes 10.

Bei einem Übertritt einer jeweiligen Gruppierung an Getränkebehältern auf den zweiten Transportabschnitt 20 verlässt der jeweilige Schubbalken 3 die jeweilige Gruppierung. Im Bereich des zweiten Transportabschnittes 20 werden die Gruppierungen an Getränkebehältern somit ohne eine rückseitige Anlage eines Schubbalkens 3 an den Getränkebehältern einer jeweiligen Gruppierung in Bewegungsrichtung BR gefördert, wenn das erste Modul 21 sich in einem Betriebsmodus befindet.

Sofern nun das erste Modul 21 aus dem zweiten Transportabschnitt 20 entnommen wird und das zweite Modul 22 mit seinen Transportbändern 23 und 23' anstelle des ersten Moduls 21 gemäß Fig. 2A im zweiten Transportabschnitt 20 angeordnet wird, muss gewährleistet werden, dass ein Schubbalken 3 während einer Förderung der Gruppierungen entlang des zweiten Transportabschnittes 20 mit den jeweiligen Getränkebehältern rückseitig in Oberflächenkontakt steht. Hierzu ist es notwendig, dass sich ein Endloszugmittel 6 mit hieran angeordneten Schubbalken 3 im Bereich des zweiten Förderabschnittes 20 befindet.

In den schematischen Seitenansichten der Figuren 2A und 2B ist nun jeweils verdeutlicht, inwiefern eine Reichweite des Endloszugmittels 6 bedarfsweise verlängert oder verkürzt werden kann. Auf Verweis mit Ziffer 16 ist in Fig. 2A eine Trennstelle angedeutet. In Fig. 2B wird das Endloszugmittel 6 im Wesentlichen im Bereich des ersten Transportabschnittes 10 umlaufend bewegt. Soll die Reichweite entlang der Transportstrecke 1 für das Endloszugmittel 6 vergrößert werden, so wird das Endloszugmittel 6 im Bereich der Trennstelle 16 (vgl. Fig. 2A) aufgetrennt. Die beiden hierdurch entstehenden Endbereiche bzw. freien Enden des Endloszugmittels 6 werden mit zwei weiteren Endbereichen bzw. freien Enden eines zusätzlichen Abschnittes 9 verbunden, welcher hierzu bereits im Bereich des zweiten Transportabschnittes 20 bereitgehalten wird.

Zudem werden an dem zusätzlichen Abschnitt 9 mehrere Schubstangen 3 in definierten Abständen angeordnet. Anschließend kann das Endloszugmittel 6 mit dem zusätzlichen Abschnitt 9 bzw. das verlängerte Endloszugmittel 6 umlaufend bewegt werden. Bewährt hat es sich in der Praxis, wenn das Endloszugmittel 6 weiterhin als Gelenkkette 7 ausgebildet ist. Das Auftrennen der Gelenkkette 7 an der Trennstelle 16 und/oder das Verbinden der Gelenkkette 7 mit dem zusätzlichen Abschnitt 9 kann unter Zuhilfenahme wenigstens eines Kettenschlosses erfolgen.

Bei einer Verkürzung der Reichweite des Endloszugmittels wird in umgekehrter Reihenfolge vorgegangen. Zunächst wird eine bis dahin über mindestens ein Kettenschloss hergestellte Verbindung aufgehoben, wodurch der zusätzliche Abschnitt 9 (vgl. Fig. 2A) von einem verbleibenden Abschnitt der Gelenkkette 7 abgetrennt wird. Der hierdurch entstehende abgetrennte Abschnitt 9' der Gelenkkette 7 wird jedoch nicht aus dem Bereich des zweiten Transportabschnittes 20 entnommen, sondern kann im Bereich des zweiten Transportabschnittes 20 bereitgehalten werden. Zusätzlich werden Schubstangen 3, welche an dem abgetrennten Abschnitt 9' angeordnet sind, vom abgetrennten Abschnitt 9' abgenommen. Die Endbereiche des verbleibenden Anteils der Gelenkkette 7 werden ggf. über ein Kettenschloss miteinander verbunden.

Die Gelenkkette 7 kann dann entsprechend Fig. 2B mit den hieran angeordneten Schubstangen 3 umlaufend bewegt werden, wobei die an der Gelenkkette 7 angeordneten Schubstangen 3 eine jeweilige Gruppierung an Getränkebehältern lediglich während ihrer jeweiligen Bewegung entlang des ersten Transportabschnittes 10 begleiten.

Folgendes sei als ergänzender Hinweis zu den vorstehenden Ausführungen gegeben. Wenn auch im Zusammenhang mit den in den Figuren gezeigten Ausführungsvarianten und deren vorstehenden Beschreibungen oftmals oder auch generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Transportstrecke 1, deren Einzelheiten oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen des erfindungsgemäßen Verfahrens und des konkreter erläuterten Aufbaus der erfindungsgemäßen Transportstrecke 1 ein besseres Verständnis für die in den Ansprüchen sowie im allgemeinen Teil der Beschreibung zumindest hinsichtlich einiger Aspekte allgemein und/oder abstrakt formulierten Erfindung abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der beschriebenen Ausführungsform gemacht werden können, ohne dabei den Schutzbereich der nachstehenden Ansprüche zu verlassen.

### Bezugszeichenliste

1 Transportstrecke
3 Schubstange
6 Endloszugmittel
7 Gelenkkette
8 Umlenkung, bestimmte Umlenkung
8' Umlenkung bestimmte Umlenkung
9 zusätzlicher Abschnitt der Gelenkkette 7
9' abgetrennter Abschnitt der Gelenkkette 7
10 erster Transportabschnitt
16 Trennstelle
17 nicht benötigter Anteil des Endloszugmittels 6
19 zusätzlich benötigter Anteil des Endloszugmittels 6
20 zweiter Transportabschnitt
21 erstes Modul
22 zweites Modul
23 Transportband
23' Transportband
38 Speicher
39 Kettenspeicher
40 Einschlagmodul
50 Zuschnittszuführung
52 Spalt
56 Verbringungseinrichtung
BR Bewegungsrichtung
S Steuerungseinrichtung

## Patentansprüche

1. Transportstrecke (1) für Artikel wie Getränkebehälter oder dergleichen, umfassend
- einen ersten Transportabschnitt (10) zur Bewegung von gruppierten Artikeln und
- einen zweiten Transportabschnitt (20), welcher an den ersten Transportabschnitt (10) anschließt und welcher
a) ein erstes Modul (21) mit mehreren umlaufend geführten Faltfingern umfasst, über welche Laschen von Verpackungszuschnitten mit einer jeweiligen hierauf aufstehenden Gruppierung an Artikeln während einer Bewegung entlang des zweiten Transportabschnittes (20) in einer aufrechten Orientierung gehalten werden können, und welcher zweite Transportabschnitt (20)
b) ein zweites Modul (22) umfasst, welches wenigstens ein Transportband (23, 23') zur Bewegung von gruppierten Artikeln entlang des zweiten Transportabschnittes (20) oder wenigstens eine Überschubplatte zur gleitenden Bewegung von Gruppierungen an Artikeln entlang des zweiten Transportabschnittes (20) umfasst, wobei
das erste Modul (21) und das zweite Modul (22) gegeneinander austauschbar sind und wobei die Transportstrecke (1) mindestens ein Endloszugmittel (6) mit mehreren hieran angeordneten Schubstangen (3) besitzt, welche mehreren Schubstangen (3) die Gruppierungen an Artikeln im Verlauf ihrer Bewegung entlang des ersten Transportabschnittes (10) unter rückseitiger Anlage begleiten, wobei eine entlang der Transportstrecke (1) ausgebildete Reichweite des jeweiligen Endloszugmittels (6) anpassbar ist, so dass
i) die am jeweiligen Endloszugmittel (6) angeordneten mehreren Schubstangen (3) entweder Gruppierungen an Artikeln im Verlauf ihrer Bewegung lediglich entlang des ersten Transportabschnittes (10) unter rückseitiger Anlage begleiten oder
ii) die am jeweiligen Endloszugmittel (6) angeordneten mehreren Schubstangen (3) Gruppierungen an Artikeln im Verlauf ihrer Bewegung entlang des ersten Transportabschnittes (10) sowie im Verlauf ihrer Bewegung entlang des zweiten Transportabschnittes (20) unter jeweiliger rückseitiger Anlage begleiten,
**dadurch gekennzeichnet, dass** im Bereich des zweiten Transportabschnittes (20) eine Führung für das jeweilige Endloszugmittel (6) vorgesehen ist und bei welcher zur Verkürzung der jeweiligen Reichweite des jeweiligen Endloszugmittels (6) ein Abschnitt vom jeweiligen Endloszugmittel (6) abtrennbar ist und die Führung zum Halten des abgetrennten Abschnittes (9') des jeweiligen Endloszugmittels (6) im Bereich des zweiten Transportabschnittes (20) ausgebildet ist.

2. Transportstrecke nach Anspruch 1, bei welcher das mindestens eine Endloszugmittel (6) durch wenigstens einen Speicher (38) geführt ist, über welchen wenigstens einen Speicher (38) bei einer Verkürzung der Reichweite des mindestens einen Endloszugmittels (6) ein nicht benötigter Anteil (17) des mindestens einen Endloszugmittels (6) aufnehmbar ist und aus welchem Speicher (38) bei einer Vergrößerung der Reichweite des mindestens einen Endloszugmittels (6) ein hierbei zusätzlich benötigter Anteil (19) des mindestens einen Endloszugmittels (6) entnehmbar ist.

3. Transportstrecke nach Anspruch 1 oder Anspruch 2, bei welcher das jeweilige Endloszugmittel (6) über wenigstens eine bestimmte Umlenkung (8, 8') geführt ist, welche wenigstens eine bestimmte Umlenkung (8, 8') zur Anpassung der Reichweite des jeweiligen Endloszugmittels (6) wahlweise entlang bzw. in einer Bewegungsrichtung (BR) der Artikel oder entgegengesetzt zu einer Bewegungsrichtung (BR) der Artikel verstellbar ist.

4. Transportstrecke nach Anspruch 3, mit einer Steuerungseinrichtung (S) und wenigstens einem Aktor, mit welchem die Steuerungseinrichtung (S) in Verbindung steht, wobei der Steuerungseinrichtungen (S) Informationen bereitstellbar sind, über welche die Steuerungseinrichtung (S) erkennen kann, ob das erste Modul (21) oder das zweite Modul (22) zum Transport von Artikeln im Bereich des zweiten Transportabschnittes (20) vorgesehen ist und bei welcher Transportstrecke (1) die Steuerungseinrichtung (S) zum automatischen und definierten Verstellen der wenigstens einen bestimmten Umlenkung (8, 8') über den wenigstens einen Aktor unter Berücksichtigung der bereitgestellten Informationen ausgebildet ist.

5. Transportstrecke nach einem der Ansprüche 1 bis 4, bei welcher das mindestens eine Endloszugmittel (6) durch mindestens eine Gelenkkette (7) und insbesondere durch mindestens eine Rollenkette ausgebildet ist, welche mindestens ein Kettenschloss umfasst, unter Zuhilfenahme welchen mindestens einen Kettenschlosses zur Verkürzung einer Reichweite der mindestens einen Gelenkkette (7) ein Abschnitt von der jeweiligen Gelenkkette (7) abtrennbar und zur Verlängerung einer Reichweite der mindestens einen Gelenkkette (7) ein zusätzlicher Abschnitt (9) mit der jeweiligen Gelenkkette (7) verbindbar ist.

6. Transportstrecke nach einem der Ansprüche 1 bis 5, bei welcher ein Untertrum des mindestens einen Endloszugmittels (6) unterhalb einer durch das erste Modul (21) und das zweite Modul (22) ausgebildeten Transportebene für Artikel geführt ist.

7. Transportstrecke nach einem der Ansprüche 1 bis 5, bei welcher ein Untertrum des mindestens einen Endloszugmittels (6) oberhalb einer durch das erste Modul (21) und das zweite Modul (22) ausgebildeten Transportebene für Artikel geführt ist.

8. Verfahren zum Anpassen einer Transportstrecke (1) für Artikel wie Getränkebehälter oder dergleichen, welche Transportstrecke (1)
- einen ersten Transportabschnitt (10) besitzt, entlang welchen ersten Transportabschnittes (10) gruppierte Artikel bewegt werden und welche Transportstrecke (1)
- einen zweiten Transportabschnitt (20) besitzt, welcher an den ersten Transportabschnitt (10) anschließt und für welchen zweiten Transportabschnitt (20) die Transportstrecke (1)
a) ein erstes Modul (21) mit mehreren umlaufend geführten Faltfingern umfasst, über die Laschen von Verpackungszuschnitten mit einer jeweiligen hierauf aufstehenden Gruppierung an Artikeln während einer Bewegung entlang des zweiten Transportabschnittes (20) in einer aufrechten Orientierung gehalten werden können, und für welchen zweiten Transportabschnitt (20) die Transportstrecke (1)
b) ein zweites Modul (22) umfasst, welches wenigstens ein Transportband (23, 23') zur Bewegung von gruppierten Artikeln entlang des zweiten Transportabschnittes (20) oder wenigstens eine Überschubplatte zur gleitenden Bewegung von Gruppierungen an Artikeln entlang des zweiten Transportabschnittes (20) besitzt und bei welchem Verfahren
mindestens ein Endloszugmittel (6) mit mehreren hieran angeordneten Schubstangen (3) vorgesehen ist, welche mehreren Schubstangen (3) die Gruppierungen an Artikeln im Verlauf ihrer Bewegung entlang des ersten Transportabschnittes (10) unter rückseitiger Anlage begleiten und bei welchem Verfahren das erste Modul (21) und das zweite Modul (22) gegeneinander ausgetauscht werden,
wobei mit einem jeweiligen Austausch eine entlang der Transportstrecke (1) ausgebildete Reichweite des jeweiligen Endloszugmittels (6) angepasst wird, so dass
i) die am jeweiligen Endloszugmittel (6) angeordneten mehreren Schubstangen (3) Gruppierungen an Artikeln im Verlauf ihrer Bewegung lediglich entlang des ersten Transportabschnittes (10) unter rückseitiger Anlage begleiten, wenn sich das erste Modul (21) im Bereich des zweiten Transportabschnittes (20) in einem Betriebsmodus befindet, oder dass
ii) die am jeweiligen Endloszugmittel (6) angeordneten mehreren Schubstangen (3) Gruppierungen an Artikeln im Verlauf ihrer Bewegung entlang des ersten Transportabschnittes (10) und entlang des zweiten Transportabschnittes (20) unter jeweiliger rückseitiger Anlage begleiten, wenn sich das zweite Modul (22) im Bereich des zweiten Transportabschnittes (20) in einem Betriebsmodus befindet,
das Verfahren **dadurch gekennzeichnet, dass**
- für eine Verkürzung der Reichweite des mindestens einen Endloszugmittels (6) ein Abschnitt vom jeweiligen Endloszugmittel (6) abgetrennt wird, welcher abgetrennte Abschnitt (9') im Bereich des zweiten Transportabschnittes (20) verbleibt und bei welchem
- für eine Verlängerung der Reichweite des mindestens einen Endloszugmittels (6) ein im Bereich des zweiten Transportabschnittes (20) bereits befindlicher zusätzlicher Abschnitt (9') mit dem jeweiligen Endloszugmittel (6) verbunden wird.

9. Verfahren nach Anspruch 8, bei welchem das mindestens eine Endloszugmittel (6) während seiner Bewegung von wenigstens einem Speicher (38) abschnittsweise aufgenommen wird, wobei bei einer Verkürzung einer Reichweite des mindestens einen Endloszugmittels (6) ein nicht benötigter Anteil (17) des mindestens einen Endloszugmittels (6) im Speicher (38) angeordnet wird und bei einer Vergrößerung der Reichweite des mindestens einen Endloszugmittels (6) ein hierbei zusätzlich benötigter Anteil (19) des mindestens einen Endloszugmittels (6) aus dem wenigstens einen Speicher (38) entnommen wird.

10. Verfahren nach Anspruch 8 oder Anspruch 9, bei welchem das jeweilige Endloszugmittel (6) über wenigstens eine bestimmte Umlenkung (8, 8') geführt ist, welche wenigstens eine bestimmte Umlenkung (8, 8') zum Anpassen einer Reichweite des jeweiligen Endloszugmittels (6) wahlweise entlang einer Bewegungsrichtung (BR) der Artikel oder entgegengesetzt zu einer Bewegungsrichtung (BR) der Artikel verstellt wird.

11. Verfahren nach Anspruch 10, bei welchem einer Steuerungseinrichtung (S) Informationen bereitgestellt werden, ob sich das erste Modul (21) oder das zweite Modul (22) im Bereich des zweiten Transportabschnittes (20) in einem Betriebsmodus befindet und wobei die Steuerungseinrichtung (S) mit wenigstens einem Aktor in Verbindung steht, über welchen die Steuerungseinrichtung (S) unter Berücksichtigung der bereitgestellten Informationen die wenigstens eine bestimmte Umlenkung (8, 8') zum Anpassen der Reichweite des jeweiligen Endloszugmittels (6) verstellt.

12. Verfahren nach einem der Ansprüche 8 bis 11, bei welchem das mindestens eine Endloszugmittel (6) durch mindestens eine Gelenkkette (7) ausgebildet ist und bei welchem
- für das jeweilige als Gelenkkette (7) ausgebildete Endloszugmittel (6) mindestens ein jeweiliges Kettenschloss vorgesehen ist, über welches zum Abtrennen des Abschnittes vom jeweiligen als Gelenkkette (7) ausgebildeten Endloszugmittels (6) eine Verbindung zwischen dem Abschnitt und einem verbleibenden Teil des jeweiligen als Gelenkkette (7) ausgebildeten Endloszugmittels (6) aufgehoben wird und über welches mindestens eine Kettenschloss
- für eine Verlängerung der Reichweite des jeweiligen als Gelenkkette (7) ausgebildeten Endloszugmittels (6) ein im Bereich des zweiten Transportabschnittes (20) bereits befindlicher zusätzlicher Abschnitt (9') mit dem jeweiligen als Gelenkkette (7) ausgebildeten Endloszugmittel (6) verbunden wird.

## Claims

1. A transport path (1) for articles, such as beverage containers or the like, the transport path (1) comprising
- a first transport section (10) for moving grouped articles and
- a second transport section (20), which connects to the first transport section (10), and which
a) comprises a first module (21) with a plurality of circulatingly guided folding fingers by means of which flaps of packaging blanks, each with a grouping of articles standing thereon, can be held in an upright orientation during a movement along the second transport section (20), and which second transport section (20)
b) comprises a second module (22), which comprises at least one conveyor belt (23, 23') for moving grouped articles along the second transport section (20) or at least one transfer plate for the sliding movement of groupings of articles along the second transport section (20), wherein
the first module (21) and the second module (22) are interchangeable, and wherein the transport path (1) has at least one endless traction means (6) with a plurality of pusher bars (3) arranged thereon, which plurality of pusher bars (3) accompanies the groupings of articles in contiguous contact with their rear ends in the course of their movement along the first transport section (10), wherein a range of the particular endless traction means (6) formed along the transport path (1) is adaptable such that
i) the plurality of pusher bars (3) arranged on the particular endless traction means (6) either accompanies groupings of articles in contiguous contact with their rear ends in the course of their movement only along the first transport section (10), or such that
ii) the plurality of pusher bars (3) arranged on the particular endless traction means (6) accompanies groupings of articles, in each case in contiguous contact with their rear ends, both in the course of their movement along the first transport section (10) and in the course of their movement along the second transport section (20),
**characterised in that** a guide for the particular endless traction means (6) is provided in the area of the second transport section (20), and in which a section is separable from the particular endless traction means (6) in order to shorten the particular range of the particular endless traction means (6), and the guide is designed to hold the separated section (9) of the particular endless traction means (6) in the area of the second transport section (20).

2. The transport path according to claim 1, in which the at least one endless traction means (6) is guided through at least one repository (38), via which at least one repository (38) a non-required portion (17) of the at least one endless traction means (6) is receivable in the case of the range of the at least one endless traction means (6) being shortened, and from which repository (38) an additionally required portion (19) for the at least one endless traction means (6) can be taken out for the case of the range of the at least one endless traction means (6) being increased.

3. The transport path according to claim 1 or claim 2, in which the particular endless traction means (6) is guided via at least one specific deflection (8, 8'), which at least one specific deflection (8, 8') is adjustable in order to adapt the range of the particular endless traction means (6) selectively along or in a direction of movement (BR) of the articles or opposite to a direction of movement (BR) of the articles.

4. The transport path according to claim 3, with a control device (S) and at least one actuator to which the control device (S) is connected, wherein the control device (S) is providable with information via which the control device (S) can detect whether the first module (21) or the second module (22) is provided in the area of the second transport section (20) for the transport of articles, and in which transport path (1) the control device (S) is designed to adjust the at least one specific deflection (8, 8') via the at least one actuator in an automatic and defined manner and taking into account the information provided.

5. The transport path according to one of the claims 1 to 4, in which the at least one endless traction means (6) is formed by at least one link chain (7) and, in particular, by at least one roller chain, which comprises at least one chain lock, with the help of which at least one chain lock a section is separable from the link chain (7) in order to shorten a range of the particular at least one link chain (7), and an additional section (9) is connectable to the link chain (7) in order to extend a range of the particular at least one link chain (7).

6. The transport path according to one of the claims 1 to 5, in which a lower strand of the at least one endless traction means (6) is guided below a transport level for articles formed by the first module (21) and by the second module (22).

7. The transport path according to one of the claims 1 to 5, in which a lower strand of the at least one endless traction means (6) is guided above a transport level for articles formed by the first module (21) and by the second module (22).

8. A method for adapting a transport path (1) for articles, such as beverage containers or the like, which transport path (1)
- has a first transport section (10) along which grouped articles are moved, and which transport path (1)
- has a second transport section (20), which connects to the first transport section (10), and for which second transport section (20) the transport path (1)
a) comprises a first module (21) with a plurality of circulatingly guided folding fingers by means of which flaps of packaging blanks, each with a grouping of articles standing thereon, can be held in an upright orientation during a movement along the second transport section (20), and for which second transport section (20) the transport path (1)
b) comprises a second module (22), which has at least one conveyor belt (23, 23') for moving grouped articles along the second transport section (20) or at least one transfer plate for the sliding movement of groupings of articles along the second transport section (20), and in which method
at least one endless traction means (6) with a plurality of pusher bars (3) arranged thereon is provided, which plurality of pusher bars (3) accompanies the groupings of articles in contiguous contact with their rear ends in the course of their movement along the first transport section (10), and in which method the first module (21) and the second module (22) are exchanged for one another,
wherein a range of the particular endless traction means (6) formed along the transport path (1) is adapted with a particular exchange such that
i) the plurality of pusher bars (3) arranged on the particular endless traction means (6) accompanies groupings of articles in contiguous contact with their rear ends in the course of their movement only along the first transport section (10) when the first module (21) in the area of the second transport section (20) is in an operating mode, or such that
ii) the plurality of pusher bars (3) arranged on the particular endless traction means (6) accompanies groupings of articles, in each case in contiguous contact with their rear ends, in the course of their movement along the first transport section (10) and along the second transport section (20) when the second module (22) in the area of the second transport section (20) is in an operating mode,
the method being **characterised in that**,
- in order to shorten the range of the at least one endless traction means (6), a section (9') is separated from the particular endless traction means (6) and remains in the area of the second transport section (20); and in which method,
- in order to extend the range of the at least one endless traction means (6), an additional section (9') already located in the area of the second transport section (20) is connected to the particular endless traction means (6).

9. The method according to claim 8, in which, while in movement, the at least one endless traction means (6) is in sections received by at least one repository (38), wherein a non-required portion (17) of the at least one endless traction means (6) is arranged in the repository (38) in the case of the range of the at least one endless traction means (6) being shortened, and an additionally required portion (19) for the at least one endless traction means (6) is taken out of the repository (38) for the case of the range of the at least one endless traction means (6) being increased.

10. The method according to claim 8 or claim 9, in which the particular endless traction means (6) is guided via at least one specific deflection (8, 8'), which at least one specific deflection (8, 8') is adjusted in order to adapt a range of the particular endless traction means (6) selectively along a direction of movement (BR) of the articles or opposite to a direction of movement (BR) of the articles.

11. The method according to claim 10, in which a control device (S) is provided with information as to whether the first module (21) or the second module (22) in the area of the second transport section (20) is in an operating mode; and wherein the control device (S) is connected to at least one actuator via which, in order to adapt the range of the particular endless traction means (6) and taking into account the information provided, the control device (S) adjusts the at least one specific deflection (8, 8').

12. The method according to one of the claims 8 to 11, in which the at least one endless traction means (6) is formed by at least one link chain (7), and in which
- at least one particular chain lock is provided for the particular endless traction means (6) designed as a link chain (7), via which chain lock a connection between the section and a remaining part of the particular endless traction means (6) designed as a link chain (7) is undone in order to separate the section from the particular endless traction means (6) designed as a link chain (7), and via which at least one chain lock
- an additional section (9') already located in the area of the second transport section (20) is connected to the particular endless traction means (6) designed as a link chain (7) in order to extend the range of the particular endless traction means (6) designed as a link chain (7).

## Revendications

1. Trajet de transport (1) pour des articles tels que récipients à boisson ou similaires, comprenant
- une première section de transport (10) pour déplacer des articles groupés et
- une deuxième section de transport (20) qui jouxte la première section de transport (10) et qui
a) comprend un premier module (21) ayant une pluralité de doigts de pliage guidés en circulation par l'intermédiaire desquels des languettes de découpes d'emballage avec un groupement respectif d'articles se trouvant là-dessus peuvent être maintenues dans une orientation verticale pendant un mouvement le long de la deuxième section de transport (20), et laquelle deuxième section de transport (20)
b) comprend un deuxième module (22) qui comprend au moins une bande transporteuse (23, 23') pour déplacer des articles groupés le long de la deuxième section de transport (20) ou au moins une plaque de transfert par poussée pour un mouvement coulissant de groupements d'articles le long de la deuxième section de transport (20), dans lequel
le premier module (21) et le deuxième module (22) sont interchangeables et dans lequel le trajet de transport (1) possède au moins un moyen de traction sans fin (6) avec une pluralité de tiges de poussée (3) disposées sur celui-ci, laquelle pluralité de tiges de poussée (3) accompagne les groupements d'articles au cours de leur mouvement le long de la première section de transport (10) avec contact arrière, dans lequel une portée du moyen de traction sans fin (6) respectif qui est formée le long du trajet de transport (1) est adaptable, de sorte que
i) la pluralité de tiges de poussée (3) disposée sur le moyen de traction sans fin (6) respectif soit accompagne des groupements d'articles au cours de leur mouvement uniquement le long de la première section de transport (10) avec contact arrière, soit
ii) la pluralité de tiges de poussée (3) disposée sur le moyen de traction sans fin (6) respectif accompagne des groupements d'articles au cours de leur mouvement le long de la première section de transport (10) ainsi qu'au cours de leur mouvement le long de la deuxième section de transport (20) avec contact arrière respectif,
**caractérisé par le fait qu'**un guide pour le moyen de traction sans fin (6) respectif est prévu au niveau de la deuxième section de transport (20), et dans lequel, pour réduire la portée respective du moyen de traction sans fin (6) respectif, une portion peut être séparée du moyen de traction sans fin (6) respectif, et le guide destiné à maintenir la portion séparée (9') du moyen de traction sans fin (6) respectif est réalisé au niveau de la deuxième section de transport (20).

2. Trajet de transport selon la revendication 1, dans lequel ledit au moins un moyen de traction sans fin (6) est mené à travers au moins un moyen de stockage (38), c'est par l'intermédiaire duquel au moins un moyen de stockage (38) qu'une partie inutilisée (17) dudit au moins un moyen de traction sans fin (6) peut être reçue lorsque la portée dudit au moins un moyen de traction sans fin (6) est réduite, et c'est à partir duquel moyen de stockage (38) qu'une partie supplémentaire requise (19) dudit au moins un moyen de traction sans fin (6) peut être retirée lorsque la portée dudit au moins un moyen de traction sans fin (6) est augmentée.

3. Trajet de transport selon la revendication 1 ou la revendication 2, dans lequel le moyen de traction sans fin (6) respectif est guidé sur au moins un dispositif de renvoi (8, 8') déterminé, lequel au moins un dispositif de renvoi (8, 8') déterminé peut être réglé pour adapter la portée du moyen de traction sans fin (6) respectif, au choix le long ou bien dans une direction de déplacement (BR) des articles ou de manière opposée à une direction de déplacement (BR) des articles.

4. Trajet de transport selon la revendication 3, comprenant un dispositif de commande (S) et au moins un actionneur avec lequel le dispositif de commande (S) est en communication, dans lequel des informations peuvent être fournies au dispositif de commande (S), par l'intermédiaire desquelles le dispositif de commande (S) peut reconnaître si le premier module (21) ou le deuxième module (22) est prévu pour transporter des articles au niveau de la deuxième section de transport (20), et dans lequel trajet de transport (1) le dispositif de commande (S) est conçu pour le réglage automatique et défini dudit au moins un dispositif de renvoi (8, 8') déterminé par l'intermédiaire dudit au moins un actionneur, en tenant compte des informations fournies.

5. Trajet de transport selon l'une quelconque des revendications 1 à 4, dans lequel ledit au moins un moyen de traction sans fin (6) est formé par au moins une chaîne articulée (7) et en particulier par au moins une chaîne à rouleaux qui comprend au moins un verrou de chaîne, c'est à l'aide duquel au moins un verrou de chaîne qu'une portion peut être séparée de la chaîne articulée (7) respective afin de réduire une portée de ladite au moins une chaîne articulée (7) et qu'une portion supplémentaire (9) peut être reliée à la chaîne articulée (7) respective afin d'augmenter une portée de ladite au moins une chaîne articulée (7).

6. Trajet de transport selon l'une quelconque des revendications 1 à 5, dans lequel un brin inférieur dudit au moins un moyen de traction sans fin (6) est guidé en dessous d'un plan de transport pour des articles formé par le premier module (21) et le deuxième module (22).

7. Trajet de transport selon l'une quelconque des revendications 1 à 5, dans lequel un brin inférieur dudit au moins un moyen de traction sans fin (6) est guidé au-dessus d'un plan de transport pour des articles formé par le premier module (21) et le deuxième module (22).

8. Procédé d'adaptation d'un trajet de transport (1) pour des articles tels que récipients à boissons ou similaires, lequel trajet de transport (1)
- possède une première section de transport (10), c'est le long de laquelle première section de transport (10) que des articles groupés sont déplacés, et lequel trajet de transport (1)
- possède une deuxième section de transport (20) qui jouxte la première section de transport (10), et c'est pour laquelle deuxième section de transport (20) que le trajet de transport (1)
a) comprend un premier module (21) ayant une pluralité de doigts de pliage guidés en circulation par l'intermédiaire desquels des languettes de découpes d'emballage avec un groupement respectif d'articles se trouvant là-dessus peuvent être maintenues dans une orientation verticale pendant un mouvement le long de la deuxième section de transport (20), et c'est pour laquelle deuxième section de transport (20) que le trajet de transport (1)
b) comprend un deuxième module (22) qui comprend au moins une bande transporteuse (23, 23') pour déplacer des articles groupés le long de la deuxième section de transport (20) ou au moins une plaque de transfert par poussée pour un mouvement coulissant de groupements d'articles le long de la deuxième section de transport (20), et dans lequel procédé
au moins un moyen de traction sans fin (6) est prévu qui comprend une pluralité de tiges de poussée (3) disposée sur celui-ci, laquelle pluralité de tiges de poussée (3) accompagne les groupements d'articles au cours de leur mouvement le long de la première section de transport (10) avec contact arrière, et dans lequel procédé le premier module (21) et le deuxième module (22) sont échangés l'un contre l'autre,
dans lequel, avec un échange respectif, une portée du moyen de traction sans fin (6) respectif qui est réalisée le long du trajet de transport (1) est adaptée de sorte que
i) la pluralité de tiges de poussée (3) disposée sur le moyen de traction sans fin (6) respectif accompagne des groupements d'articles au cours de leur mouvement uniquement le long de la première section de transport (10) avec contact arrière lorsque le premier module (21) se trouve dans un mode de fonctionnement au niveau de la deuxième section de transport (20), ou que
ii) la pluralité de tiges de poussée (3) disposée sur le moyen de traction sans fin (6) respectif accompagne des groupements d'articles au cours de leur mouvement le long de la première section de transport (10) et le long de la deuxième section de transport (20) avec contact arrière respectif lorsque le deuxième module (22) se trouve dans un mode de fonctionnement au niveau de la deuxième section de transport (20),
ledit procédé étant **caractérisé par le fait que**
- afin de réduire la portée dudit au moins un moyen de traction sans fin (6), une portion est séparée du moyen de traction sans fin (6) respectif, laquelle portion séparée (9') reste au niveau de la deuxième section de transport (20) et dans lequel
- afin d'augmenter la portée dudit au moins un moyen de traction sans fin (6), une portion supplémentaire (9') se trouvant déjà au niveau de la deuxième section de transport (20) est reliée au moyen de traction sans fin (6) respectif.

9. Procédé selon la revendication 8, dans lequel ledit au moins un moyen de traction sans fin (6) est reçu par sections, pendant son mouvement, par au moins un moyen de stockage (38), dans lequel lorsqu'une portée dudit au moins un moyen de traction sans fin (6) est réduite, une partie inutilisée (17) dudit au moins un moyen de traction sans fin (6) est disposée dans le moyen de stockage (38), et lorsque la portée dudit au moins un moyen de traction sans fin (6) est augmentée, une partie supplémentaire requise (19) dudit au moins un moyen de traction sans fin (6) est retirée dudit au moins un moyen de stockage (38).

10. Procédé selon la revendication 8 ou la revendication 9, dans lequel le moyen de traction sans fin (6) respectif est guidé sur au moins un dispositif de renvoi (8, 8') déterminé, lequel au moins un dispositif de renvoi (8, 8') déterminé est réglé pour adapter une portée du moyen de traction sans fin (6) respectif, au choix le long d'une direction de déplacement (BR) des articles ou de manière opposée à une direction de déplacement (BR) des articles.

11. Procédé selon la revendication 10, dans lequel des informations sont fournies à un dispositif de commande (S), qui disent si le premier module (21) ou le deuxième module (22) au niveau de la deuxième section de transport (20) se trouve dans un mode de fonctionnement, et dans lequel le dispositif de commande (S) est en communication avec au moins un actionneur par l'intermédiaire duquel le dispositif de commande (S) règle ledit au moins un dispositif de renvoi (8, 8') déterminé pour adapter la portée du moyen de traction sans fin (6) respectif, en tenant compte des informations fournies.

12. Procédé selon l'une quelconque des revendications 8 à 11, dans lequel ledit au moins un moyen de traction sans fin (6) est formé par au moins une chaîne articulée (7) et dans lequel
- pour ledit moyen de traction sans fin (6) respectif conçu en tant que chaîne articulée (7), au moins un verrou de chaîne respectif est prévu, par l'intermédiaire duquel une liaison entre la portion et une partie restante du moyen de traction sans fin (6) respectif conçu en tant que chaîne articulée (7) est supprimée afin de séparer la portion du moyen de traction sans fin (6) respectif conçu en tant que chaîne articulée (7), et par l'intermédiaire duquel au moins un verrou de chaîne
- une section supplémentaire (9') se trouvant déjà au niveau de la deuxième section de transport (20) est reliée au moyen de traction sans fin (6) respectif conçu en tant que chaîne articulée (7), afin d'augmenter la portée du moyen de traction sans fin (6) respectif conçu en tant que chaîne articulée (7).
